# EUROPÄISCHE PATENTSCHRIFT

(11) **EP 0 472 979 B1**
(45) Veröffentlichungstag und Bekanntmachung des Hinweises auf die Patenterteilung: **09.03.1994**
(21) Anmeldenummer: 91113371.8
(22) Anmeldetag: 09.08.1991
(51) Int. Cl.: B23Q 1/18, B27B 5/06

(54) **Werkzeugmaschine zur Bearbeitung flächiger Werkstücke**
Machine-tool for working plate like workpieces
Machine-outil à usiner des pièces plates

(30) Priorität: 28.08.1990 CH 2791/90
(43) Veröffentlichungstag der Anmeldung: 04.03.1992
(73) Patentinhaber: Beer, Alfred, CH-6330 Cham (CH)
(72) Erfinder: Beer, Alfred, CH-6330 Cham (CH)
(74) Vertreter: OK pat AG

(56) Entgegenhaltungen:
- EP-A- 0 223 214
- EP-A- 0 229 668
- DE-A- 3 207 873
- DE-A- 3 528 901
- FR-A- 2 255 993
- PATENT ABSTRACTS OF JAPAN, Band 11, Nr. 48 (M-561)][2495], 13. Februar 1987;& JP-A-61 209 831 (OMRON TATEISI ELECTRONICS CO.) 18-09-1986

## Beschreibung

Die Erfindung betrifft eine Werkzeugmaschine zur Bearbeitung flächiger Werkstücke, mit einem vertikalen oder leicht nach hinten geneigten, rechteckigen Grundrahmen, welcher einen Stützrost für die Werkstücke umgibt, einem Träger, welcher an zwei gegenüberliegenden Rahmenseiten geführt und entlang diesen über den Stützrost verfahrbar ist, und einem eine Werkzeugspindel enthaltenden Bearbeitungsaggregat, welches am Träger geführt und entlang diesem verfahrbar ist.

Maschinen dieser Art sind als sogenannte Plattensägen zum Zuschneiden von Platten aus Holz oder holzähnlichem Material bekannt. Sie enthalten als Bearbeitungsaggregat eine Kreissägevorrichtung mit zur Ebene des Stützrostes paralleler Spindel, die zur wahlweisen Durchführung von Horizontal- oder Vertikalschnitten um 90° schwenkbar ist. Die Anwendung solcher Plattensagen beschränkt sich auf das Zuschneiden oder Besäumen von rechtwinkligen Platten mittels Kreissägeblättern. Der Vorschub der Sägevorrichtung erfolgt von Hand, in vertikaler Richtung meist unterstützt durch Gegengewichte oder Federanordnungen.

Zudem sind Werkzeugmaschinen zum Bearbeiten flächiger Werkstükke (DE-A-32 07 873) bekannt, mit einem etwa vertikalen, rechteckigen Grundrahmen, welcher einen Stützrost für die Werkstücke umgibt, einem Träger, welcher an zwei gegenüberliegenden Rahmenseiten geführt und entlang diesen über den Stützrost verfahrbar ist und einem eine Werkzeugspindel enthaltenden Bearbeitungsaggregat, welches am Träger geführt und entlang diesem verfahrbar ist. An einem der genannten zwei gegenüberliegenden Rahmenseiten und am Träger ist dabei je eine Vorschubspindel vorgesehen, der jeweils am Ende des Trägers und an einem Wagen eine Spindelmutter zugeordnet ist. Je Antrieb ist ein numerisch gesteuerter Vorschubmotor vorgesehen. Ferner trägt der am Träger montierte Wagen das Bearbeitungsaggregat mit zum Stützrost gerichteter Werkzeugachse.

Bei räumlich grossen Werkzeugmaschinen haben solche Vorrichtungen den Nachteil, dass die Positionsgenauigkeit nicht ausreicht, um hochwertige Bearbeitungen durchzuführen.

Die Aufgabe der vorliegenden Erfindung ist somit darin zu sehen, die vorskizzierten Nachteile des Standes der Technik zu vermeiden und eine Vorrichtung zu schaffen, auf der flächige Werkstücke, mit erhöhter Präzision der Werkzeugpositionierung, bearbeitet werden können und welche vielfältige und genaue Bearbeitungsvorgänge an Werkstücken aus praktisch beliebigem Werkstoff rationell auszuführen gestattet. Ausgehend vom eingangs genannten Grundaufbau einer Werkzeugmaschine ist diese Aufgabe erfindungsgemäss dadurch gelöst, dass an den genannten zwei gegenüberliegenden Rahmenseiten und am Träger je eine Feingewinde-Vorschubspindel fest und undrehbar verspannt ist und dass jeder der drei Vorschubspindeln eine umlaufend antreibbare Spindelmutter zugeordnet ist, die je in einer Vorschubeinrichtung mit numerisch gesteuertem Vorschubmotor gelagert sind, wobei zwei dieser Vorschubeinrichtungen, deren Vorschubmotoren gleichlaufend gesteuert sind, je an einem Ende des Trägers und die dritte Vorschubeinrichtung auf einem am Träger geführten Wagen montiert sind, welcher Wagen das Bearbeitungsaggregat mit zum Stützrost gerichteter Werkzeugachse trägt.

Mit einer solchen Werkzeugmaschine werden die bekannten Vorteile der Plattensägen, insbesondere die bequeme Werkstück-Handhabung (Beladen und Entladen der Maschine) beibehalten, jedoch die Anwendungsmöglichkeiten in unerwartetem Ausmass erweitert: Der erfindungsgemässe Aufbau ermöglicht die präzise und rasche Werkzeug-Positionierung und beliebige gradlinige oder gekrümmte Vorschubbewegungen über eine ausgedehnte Arbeitsfläche. Dabei lassen sich jegliche Fräs- und Bohroperationen an flächigen Werkstücken insbesondere auch aus Kunststoff, Metall oder Schichtmaterial (Sandwich- oder Wabenplatten usw.) problemlos mit hoher Fertigungsqualität und programmgesteuert ausführen. Allgemein sind dabei die gute Uebersicht und leichte Zugänglichkeit bei der Bearbeitung und beim Werkzeugwechsel, ungehinderter Späneabfluss und die minimale Durchbiegung auch grossflächiger Werkstücke in der Bearbeitungsebene von Vorteil.

Zweckmässige besondere Ausgestaltungen des im Patentanspruch 1 definierten Erfindungsgegenstandes sind in den Ansprüchen 2 bis 11 angegeben.

Ein Ausführungsbeispiel der erfindungsgemässen Werkzeugmaschine wird nachstehend im Zusammenhang mit der Zeichnung näher erläutert. Dabei zeigen
- Fig. 1: eine Vorderansicht und
- Fig. 2: eine Seitenansicht der Werkzeugmaschine;
- Fig. 3: ist ein Schnitt entlang der Linie III-III in Fig. 1,
- Fig. 4: ist ein Schnitt entlang der Linie IV-IV in Fig. 1,
- Fig. 5: veranschaulicht schematisch die Verankerung und Verspannung der oberen, horizontalen Vorschubspindel mit zugehöriger, teilweise geschnitten gezeichneter Vorschubeinrichtung, und
- Fig. 6: zeigt ein Beispiel einer (fakultativen) Zwischenabstützung einer Vorschubspindel.

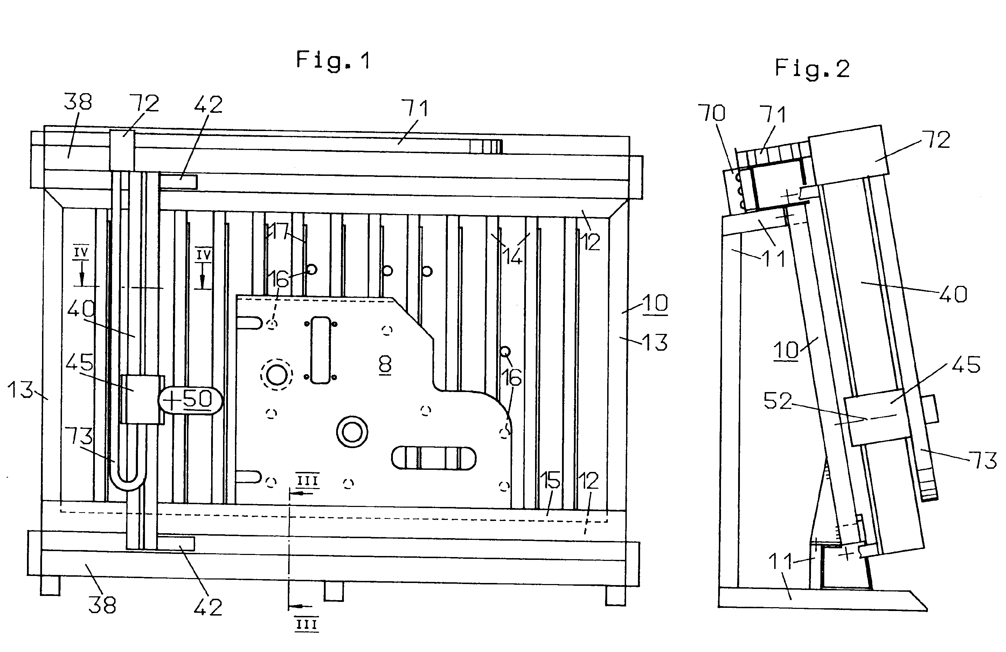

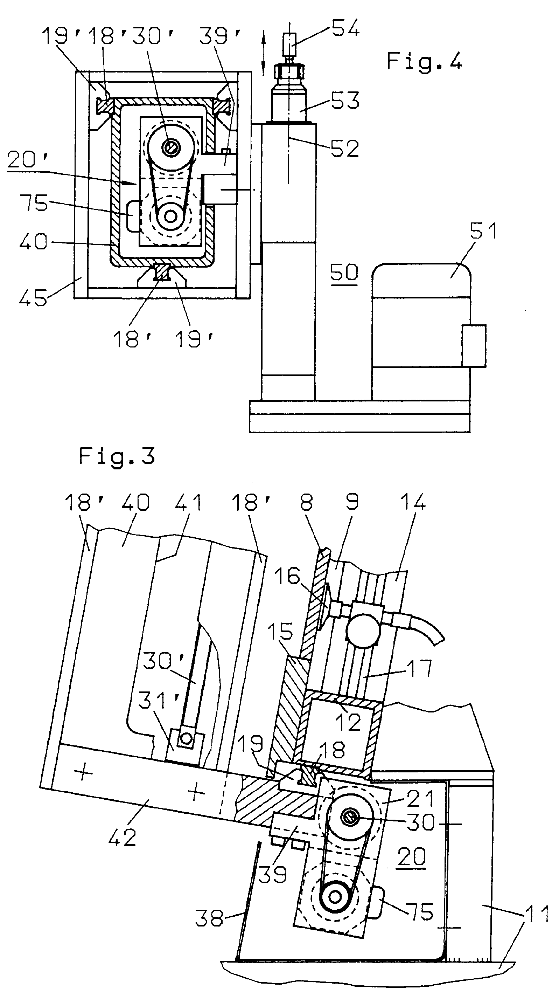

Die dargestellte Werkzeugmaschine weist einen rechteckigen Grundrahmen 10 aus paarweise parallelen Rahmenseiten 12 und 13 auf, wobei die längeren Rahmenseiten 12 horizontal verlaufen. Der Grundrahmen 10 ist in etwa vertikaler Lage - vorzugsweise leicht nach hinten geneigt - mit einem Maschinenständer 11 verschraubt. Für die Aufnahme von flächigen Werkstücken 8 ist innerhalb des Rahmens 10 ein Stützrost vorgesehen, gebildet durch zueinander parallele, die beiden längeren Rahmenseiten 12 verbindende Stützleisten 14. Jede Stützleiste 14 ist werkstückseitig mit einer vorzugsweise aus Kunststoff bestehenden, auswechselbaren Auflageleiste 9 versehen (Fig. 3); die Auflageleisten 9 bilden zusammen eine genau bearbeitete, ebene Auflagefläche für die Werkstücke 8. An der Vorderseite der unteren Rahmenseite 12 ist eine durchgehende Leiste 15 befestigt, die als Anschlag für die Unterkante der Werkstücke 8 dient. Wie aus den Fig. 1 und 3 ersichtlich, sind zum Festspannen der Werkstücke eine Mehrzahl von Saugnäpfen 16 (Vakuum-Sauger) vorgesehen, die entlang von seitlich an den Stützleisten 14 angebrachten Nut-Schienen 17 verschiebbar sind. Mittels mehreren solchen am Werkstück rückseitig angreifenden und an eine (nicht dargestellte) Unterdruckquelle angeschlossenen Saugnäpfen 16 wird das Werkstück 8 gegen die Auflagefläche des Stützrostes gehalten.

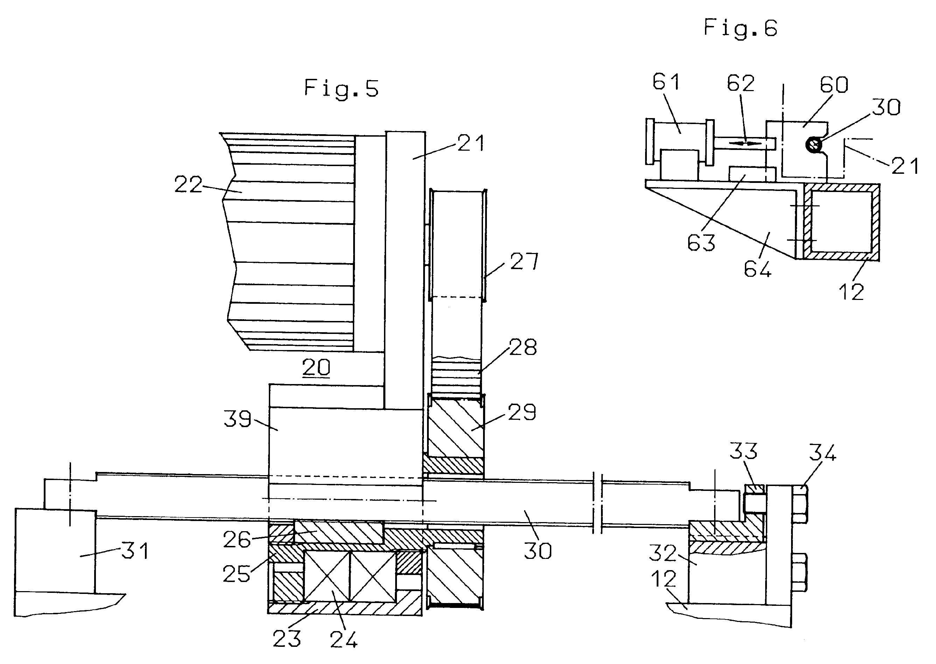

Ein Träger 40 ist an zwei gegenüberliegenden Rahmenseiten geführt und entlang diesen über den Stützrost 14 verfahrbar; zweckmässigerweise ist, wie im vorliegenden Fall, der Träger 40 in Vertikalrichtung angeordnet und an den beiden längeren, horizontal verlaufenden Rahmenseiten 12 geführt. Am Träger 40 ist sodann ein Wagen 45 geführt, der seinerseits entlang dem Träger verfahrbar ist. Der Wagen 45 trägt ein Bearbeitungsaggregat 50, welches mindestens eine Werkzeugspindel 53 mit zum Stützrost 14 gerichteter Werkzeugachse 52 trägt. Zur Führung des Trägers 40 entlang den Rahmenseiten 12 (x-Richtung) ist an der Unterseite der unteren Rahmenseite 12 eine Führungsschiene 18 befestigt, und eine gleiche Führungsschiene befindet sich an der Oberseite der oberen Rahmenseite 12 (nicht sichtbar). Der Träger 40 weist an jedem seiner Enden einen seitlich gegen den Grundrahmen 10 hin abstehenden Ausleger 42 auf, und an jedem Ausleger ist mindestens eine Führungseinheit 19 befestigt, die mit der betreffenden Führungsschiene 18 im Eingriff steht; vorzugsweise sind an jedem Ausleger 42 zwei in Richtung der Führungsschiene 18 versetzt angeordnete Führungseinheiten vorgesehen. In entsprechender Weise ist auch der Wagen 45 zur Bewegung entlang dem Träger 40 (y-Richtung) geführt: Wie aus Fig. 4 hervorgeht, sind an der Aussenseite des als Vierkant-Hohlprofil ausgebildeten Trägers 40 drei Führungsschienen 18' befestigt. Der Wagen 45 ist kastenartig ausgebildet und umgibt das Profil des Trägers 40. An der Innenseite des Wagens 45 sind drei Führungseinheiten 19' befestigt, die mit den Führungsschienen 18' in Eingriff stehen. Durch Verwendung an sich bekannter Rollenführungen 19, 19' und geschliffener Führungsleisten 18, 18' wird eine präzise, spielfreie und leichtgängige Führung in x- und y-Richtung gewährleistet.

Die Stellbewegungen des Trägers 40 und des Wagens 45 zur Positionierung und Bahnführung der Werkzeugachse(n), sowie allfällige Bewegungen der Werkzeugspindel(n) 53 in Richtung der Werkzeugachse 52 (z-Richtung) sind numerisch gesteuert; es kann hierzug eine an sich bekannte, sogenannt 2,5-achsige, programmierbare Mikroprozessor-Steuerung verwendet werden, die hier nicht näher darzustellen und zu beschreiben ist. Die numerisch gesteuerten Stellmittel der Werkzeugmaschine für die x- und die y-Richtung sind wie folgt ausgebildet:

An den beiden gegenüberliegenden Rahmenseiten 12 ist je eine Feingewinde-Vorschubspindel 30 fest und undrehbar verspannt; die obere Spindel 30 ist in Fig. 5 dargestellt, und die untere, gleiche Spindel ist in Fig. 3 im Schnitt sichtbar. Eine ebensolche Vorschubspindel 30' ist in gleicher Weise am Träger 40 verspannt, und zwar vorzugsweise im Innern des Hohlprofils, wie aus den Fig. 3 und 4 hervorgeht. Zweckmässigerweise sind die Vorschubspindeln 30, 30' unter Vorspannung in Längsrichtung befestigt, beispielsweise mittels einer Anordnung gemäss Fig. 5: jeweils das eine Spindelende ist an einem festen Aufleger 31 (bzw. 31', Fig. 3) festgeschraubt, während das andere Ende der Spindel mit einem Schlitten 33 verschraubt ist, der an einem zweiten festen Aufleger 32 geführt ist und mittels einer Spannschraube 34 verschoben werden kann, um die Spindel im gewünschten Mass unter Zugspannung zu setzen.

Jeder Vorschubspindel 30, 30' ist eine Spindelmutter 26 zugeordnet (Fig. 5), welche Bestandteil einer verfahrbaren Vorschubeinrichtung 20 bzw. 20' mit numerisch gesteuertem Vorschubmotor 22 ist. Alle drei Vorschubeinrichtungen sind im wesentlichen gleich aufgebaut; die Einrichtungen 20 sind mit ihrer jeweiligen Spindel 30 in einer unteren bzw. oberen, kanalartigen Verschalung 38 untergebracht, während die Vorschubeinrichtung 20' sich mit der Spindel 30' im Innern des Trägers 40 befindet. Ein zweckmässiger Aufbau der Vorschubeinrichtungen geht aus Fig. 5 hervor. In einem von einer Grundplatte 21 abstehenden Gehäuse 23 ist eine Hohlwelle 25 mittels Kugellagern 24 gelagert. Im Innern der Hohlwelle 25 ist die Spindelmutter 26 mittels einem Spannring befestigt. Auf der Grundplatte 21 ist neben dem Gehäuse 23 der numerisch gesteuerte Vorschubmotor 22 montiert. Dessen Welle treibt über einen Zahnriemen 28, welcher über Riemenscheiben 27, 29 läuft, die Hohlwelle 25 vorzugsweise mit Drehzahl-Untersetzung an. Dadurch werden die numerisch gesteuerten Drehbewegungen des Motors 22 auf die Spindelmutter 26 übertragen, und entsprechend verschiebt sich die Vorschubeinrichtung entlang dem Gewinde der Vorschubspindel. Die Vorschubmotoren 22 der beiden Vorschubeinrichtungen 20 (für die x-Richtung) sind dabei gleichlaufend gesteuert, so dass immer gleiche Stellbewegungen entlang der oberen und der unteren Vorschubspindel 30 gewährleistet sind. Zur Uebertragung der Stellbewegungen der Vorschubeinrichtungen 20 und 20' dient ein seitlicher Ansatz 39, welcher von der Grundplatte 21 und dem Gehäuse 23 ausgeht. Der obere und der untere Ausleger 42 des Trägers 40 sind mit je einem dieser Ansätze 39 der oberen bzw. unteren Vorschubeinrichtung 20 verschraubt. Der Ansatz 39' der Vorschubeinrichtung 20' dagegen ragt durch den Längsschlitz 41 des Trägers 40 und ist mit dem Wagen 45 verschraubt.

Die beschriebene Konstruktion mit fest und undrehbar verspannten Vorschubspindeln und daran verfahrbaren Vorschubeinrichtungen mit umlaufend angetriebener Spindelmutter ermöglicht genaue Vorschub- bzw. Stellbewegungen bei relativ hoher Stellgeschwindigkeit über grosse Stellbereiche bzw. ausgedehnte Bearbeitungsflächen. Dank "ruhender" Vorschubspindeln ergeben sich keinerlei Schwierigkeiten bezüglich Lagerspiel und kritischen Drehzahlen, wie sie bei rotierenden Spindeln bestehen. Anderseits ergeben sich bei geringer Steigung des Spindelgewindes relativ hohe Drehzahlen des Vorschubmotors bei gegebener Stellgeschwindigkeit. Dies ergibt wiederum Motoren mit geringen Abmessungen und kleinem Trägheitsmoment und damit relativ niedriges Gewicht und geringe Trägheit der gesamten Vorschubeinrichtung. Zudem werden bei kleiner Gewindesteigung und mit Drehzahl-Untersetzung zwischen Motorwelle und Spindelmutter hohe Vorschubkräfte, wie sie beim Fräsen erforderlich sind, bereits mit relativ geringer Leistung der Vorschubmotoren erreicht. Besonders geeignet sind Präzisions-Rollenspindeln mit sogenannten Satelliten-Spindelmuttern, die unter der Handelsbezeichnung ROLLVIS bekannt sind.

Bei grossen Maschinen-Abmessungen könnte die Durchbiegung der horizontalen Vorschubspindeln infolge ihres Eigengewichts (trotz Vorspannung) sich nachteilig auf die Stellgenauigkeit auswirken, vor allem in den Endbereichen des Stellweges. Es können dann eine oder mehrere Zwischenabstützungen vorgesehen werden, etwa gemäss dem Beispiel nach Fig. 6 für die obere Vorschubspindel 30. Hauptbestandteil einer solchen Zwischenabstützung ist ein z.B. plattenförmiges Stützorgan 60, welches die Spindel 30 untergreift und sich auf der Rahmenseite 12 und/oder einer angrenzenden Konsole 64 abstützt und in einer Seitenführung 63 gleitet. Das Stützorgan 60 ist mit einem geeigneten Hubantrieb, beispielsweise einem pneumatischen Zylinder 61 über die Hubstange 62 verbunden. Mit Hilfe des Hubantriebs lässt sich das Stützorgan 60 aus dem Bewegungsbereich der zugeordneten Vorschubeinrichtung ausfahren (die Umrisse der Grundplatte 21 sind in Fig. 6 strichpunktiert gezeichnet). In Abhängigkeit von der Fahrstellung der Vorschubeinrichtung 20 erfolgt das Ausfahren und Wiedereinfahren des Stützorgans 60 automatisch. Die automatische Bewegung des Stützorgans lässt sich leicht über die numerische Steuerung jeweils bei Annäherung der Vorschubeinrichtung an den Ort der Zwischenabstützung bewerkstelligen.

Die Vorschubeinrichtungen 20 und 20' sind mit Anschlussboxen 75 für die Speisung des Vorschubmotors sowie Positionsgeber für die Steuerung der Vorschubmotoren bzw. für die Gleichlaufregelung der oberen und der unteren Vorschubeinrichtung 20 versehen. Für die Speise- und Steuerleitungen an der Maschine ist eine Anschlussboxe 70 (Fig. 2) vorgesehen. Von dort verlaufen die Leitungen über eine flexible Kabelführung 71 zu einem auf dem Träger 40 befestigten Zwischenkasten 72 und von dort über den Träger zur oberen und unteren Vorschubeinrichtung 20. Vom Zwischenkasten 72 führt eine weitere flexible Kabelführung 73 zum Wagen 45 und der Vorschubeinrichtung 20', bzw. zum Bearbeitungsaggregat 50.

Ein einfaches Beispiel eines Bearbeitungsaggregates 50 ist in Fig. 4 dargestellt. Dessen Antriebsmotor 51 treibt die Werkzeugspindel 53 mit dem Werkzeug 54, beispielsweise einem Fräser oder Bohrer, an. Selbstverständlich können mehrere Spindeln vorgesehen sein sowie Zusatzeinrichtungen für Werkzeugwechsel, Kühlmittelzufuhr usw. Im allgemeinen wird die Werkzeugspindel 53 in Richtung der Werkzeugachse 52 (z-Richtung) beweglich bzw. verstellbar sein. Die Werkzeugachse 52 ist generell zum Stützrost gerichtet, und zwar im allgemeinen senkrecht zur Ebene des Stützrostes, wobei jedoch die Möglichkeit einer Schiefstellung für bestimmte Bearbeitungen nicht ausgeschlossen werden soll.

Die beschriebene Werkzeugmaschine bietet ausserordentlich vielfältige Möglichkeiten zur Bearbeitung flächiger bzw. plattenförmiger Werkstücke, von denen einige am Werkstück 8 in Fig. 1 angedeutet sind: Herstellung beliebiger Umrissformen mittels Bahnsteuerung, seitliche Einschnitte, Randnuten und Anschrägen der Werkstückkanten; Herstellen von Ausschnitten beliebiger Form, Bohrungen, Ansenken von Bohrungen auf der Vorder- und Rückseite, Gewindeschneiden, gerade und gekrümmte Oberflächennuten, Gravuren; Einpressen und Eindrehen von Bolzen, usw.

Bei zur Seite gefahrenem Träger 40 kann die Maschine von vorn oder oben mit den Werkstücken beladen werden, vor allem aber können Werkstücke von der Seite her eingeführt und auf der Anschlagleiste 15 weitergeschoben und nach beendeter Bearbeitung schliesslich wieder ausgeschoben werden. Allenfalls können auch mehrere (insbesondere dünnflächige) Werkstücke aufeinander gestapelt und "paketweise" bearbeitet werden.

## Patentansprüche

1. Werkzeugmaschine zur Bearbeitung flächiger Werkstücke, mit einem vertikalen oder leicht nach hinten geneigten, rechteckigen Grundrahmen (10), welcher einen Stützrost (14) für die Werkstücke umgibt, einem Träger (40), welcher an zwei gegenüberliegenden Rahmenseiten (12) geführt und entlang diesen über den Stützrost verfahrbar ist, und einem eine Werkzeugspindel (53) enthaltenden Bearbeitungsaggregat (50), welches am Träger (40) geführt und entlang diesem verfahrbar ist, dadurch **gekennzeichnet**, dass an den genannten zwei gegenüberliegenden Rahmenseiten (12) und am Träger (40) je eine Feingewinde-Vorschubspindel (30, 30') fest und undrehbar verspannt ist und dass jeder der drei Vorschubspindeln (30, 30') eine umlaufend antreibbare Spindelmutter (26) zugeordnet ist, die je in einer Vorschubeinrichtung (20, 20') mit numerisch gesteuertem Vorschubmotor (22) gelagert sind, wobei zwei dieser Vorschubeinrichtungen (20), deren Vorschubmotoren (22) gleichlaufend gesteuert sind, je an einem Ende des Trägers (40) und die dritte Vorschubeinrichtung (20') auf einem am Träger geführten Wagen (45) montiert sind, welcher Wagen das Bearbeitungsaggregat (50) mit zum Stützrost (14) gerichteter Werkzeugachse (52) trägt.

2. Werkzeugmaschine nach Anspruch 1, dadurch gekennzeichnet, dass die Vorschubspindeln (30, 30') unter Längsvorspannung an den Rahmenseiten (12) bzw. am Träger (40) befestigt sind.

3. Werkzeugmaschine nach Anspruch 1, dadurch gekennzeichnet, dass in einem Gehäuse (23) einer Vorschubeinrichtung (20, 20') eine die Spindelmutter (26) aufnehmende Hohlwelle (25) drehbar gelagert ist, wobei die Hohlwelle (25) vom zugehörigen Vorschubmotor (22) über ein Drehzahl-Untersetzungsgetriebe (27, 28, 29) antreibbar ist.

4. Werkzeugmaschine nach Anspruch 1, gekennzeichnet durch einer oder mehreren Vorschubspindeln (30, 30') zugeordnete, bewegliche Stützorgane (60), die in Abhängigkeit der Fahrstellung der zugeordneten Vorschubeinrichtung (20, 20') aus deren Bewegungsbereich automatisch ausfahrbar ist.

5. Werkzeugmaschine nach Anspruch 1, dadurch gekennzeichnet, dass der Träger (40) ein Hohlprofil mit Längsschlitz (41) aufweist, wobei die Vorschubspindel (30') und zugeordnete Vorschubeinrichtung (20') im Innern des Hohlprofils angeordnet sind.

6. Werkzeugmaschine nach Anspruch 5, dadurch gekennzeichnet, dass der das Bearbeitungsaggregat (50) tragende Wagen (45) durch den Längsschlitz (41) hindurch mit der Vorschubeinrichtung verbunden, kastenartig um das Hohlprofil des Trägers (40) herum angeordnet und mittels aussen an letzterem befestigten Führungsschienen (18') geführt ist.

7. Werkzeugmaschine nach Anspruch 1, dadurch gekennzeichnet, dass der Träger (40) an jedem seiner Enden einen seitlich gegen den Grundrahmen (10) hin abstehenden Ausleger (42) aufweist, welcher mit einer der Vorschubeinrichtungen (20) und mindestens einer Führungseinheit (19) verbunden ist, wobei die Führungseinheiten (19) je an Führungsschienen (18), die an den genannten Rahmenseiten (12) befestigt sind, geführt sind.

8. Werkzeugmaschine nach Anspruch 1, dadurch gekennzeichnet, dass eine oder mehrere Werkzeugspindeln (53) des Bearbeitungsaggregates (50) in Richtung der Werkzeugachse (52) verstellbar sind.

9. Werkzeugmaschine nach Anspruch 1, dadurch gekennzeichnet, dass der Träger (40) in Vertikalrichtung angeordnet und an den beiden längeren, horizontal verlaufenden Rahmenseiten (12) geführt ist.

10. Werkzeugmaschine nach Anspruch 1, dadurch gekennzeichnet, dass der Stützrost durch zueinander parallele, die beiden längeren Rahmenseiten (12) verbindende Stützleisten (14) gebildet ist.

11. Werkzeugmaschine nach Anspruch 1, dadurch gekennzeichnet, dass als Werkstück-Spannmittel mehrere am Stützrost (14) verstellbar angebrachte, an den Werkstücken rückseitig angreifende Saugnäpfe (16) vorhanden sind.

## Claims

1. Machine tool for machining platelike workpieces, having a vertical or slightly rearwardly inclined, rectangular basic frame (10) which surrounds a grating (14) for supporting the workpieces, a carrier (40) set on two opposing sides (12) of the frame and adapted to be moved along them over the support grating, and a machining unit (50) which contains a tool spindle (53) and is set on the carrier (40) and adapted to be moved along it,
characterised in that a fine-thread feed screw (30, 30') is rigidly and non-rotatably clamped on each of said two opposing frame sides (12) and on the carrier (40), and that a spindle nut (26) adapted to be driven in rotation is associated with each of the three feed screws (30, 30'), said spindle nuts each being mounted in a feeding device (20, 20') with a numerically controlled feed motor (22), and two of said feeding devices (20), the feed motors (22) of which are synchronously controlled, being fitted one at each end of the carrier (40) and the third feeding device (20') being fitted on a car (45) set on the carrier, which car carries the machining unit (50) with the tool axis (52) directed at the support grating (14).

2. Machine tool according to claim 1, characterised in that the feed spindles (30, 30') are attached longitudinally pretensioned to the frame sides (12) and to the carrier (40), respectively.

3. Machine tool according to claim 1, characterised in that a hollow shaft (25) accommodating the spindle nut (26) is rotatably mounted in a housing (23) of a feeding device (20, 20'), the hollow shaft (25) being adapted to be driven by the associated feed motor (22) via a speed reduction gear (27, 28, 29).

4. Machine tool according to claim 1, characterised by movable supporting members (60) associated with one or more feed spindles (30, 30'), said supporting members (60) being adapted to be automatically retracted from the path of travel of the associated feeding device (20, 20') in dependence on its travelling position.

5. Machine tool according to claim 1, characterised in that the carrier (40) has a hollow section incorporating a lengthways slot (41), the feed spindle (30') and associated feeding device (20') being arranged inside the hollow section.

6. Machine tool according to claim 5, characterised in that the car (45) carrying the machining unit (50) is connected through the lengthways slot (41) to the feeding device, is arranged like a box around the hollow section of the carrier (40) and runs by means of guide rails (18') fastened externally to said carrier (40).

7. Machine tool according to claim 1, characterised in that at each of its ends the carrier (40) has an arm (42) which projects laterally towards the basic frame (10) and is joined to one of the feeding devices (20) and to at least one guide unit (19), the guide units (19) each being set on guide rails (18) fastened to the aforemsaid frame sides (12).

8. Machine tool according to claim 1, characterised in that one or more tool spindles (53) of the machining unit (50) are adjustable in the direction of the tool axis (52).

9. Machine tool according to claim 1, characterised in that the carrier (40) is arranged to run vertically and along the two longer, horizontally extending frame sides (12).

10. Machine tool according to claim 1, characterised in that the support grating is constituted by mutually parallel support strips (14) connecting the two longer frame sides (12).

11. Machine tool according to claim 1, characterised in that arranged adjustably on the support grating (14) and operating on the reverse of the workpieces are a plurality of suction cups (16) which act as workpiece holding means.

## Revendications

1. Machine-outil à usiner des pièces plates, comprenant un cadre de base (10), rectangulaire et vertical, ou légèrement incliné vers l'arrière, qui entoure une grille de support (14) pour les pièces, un support (40), guidé sur deux côtés opposés (12) du cadre et agencé de façon à pouvoir être déplacé le long de ces côtés, au-dessus de la grille de support, et un ensemble d'usinage (50) qui contient une broche d'outil (53) et qui est guidé sur le support (40) et est agencé de façon à pouvoir être déplacé le long de ce dernier, caractérisée en ce que, sur les deux susdits côtés opposés (12) du cadre et sur le support (40), il est monté, sur chacun, rigidement et sans possibilité de rotation, une tige filetée d'avance (30, 30') à pas fin et en ce qu'à chacune des trois tiges filetées d'avance (30, 30'), il est associé un écrou de tige filetée (26) agencé de façon à pouvoir être entraîné en rotation et monté, pour chacun, dans un dispositif d'avance (20, 20') comportant un moteur d'avance (22) à commande numérique, deux de ces dispositifs d'avance (20), dont les moteurs d'avance (22) sont commandés d'une manière synchrone, étant montés chacun sur une extrémité du support (40), tandis que le troisième dispositif d'avance (20') est monté sur un chariot (45) qui est guidé sur le support et porte l'ensemble d'usinage (50) dont l'axe (52) de l'outil est dirigé vers la grille de support (14).

2. Machine-outil suivant la revendication 1, caractérisée en ce que les tiges filetées d'avance (30, 30') sont fixées respectivement sur les côtés (12) du cadre et sur le support (40) en étant placées sous une précontrainte longitudinale.

3. Machine-outil suivant la revendication 1, caractérisée en ce qu'un arbre creux (25) recevant l'écrou de tige filetée (26) est monté d'une manière rotative dans un boîtier (23) d'un dispositif d'avance (20, 20'), l'arbre creux (25) étant agencé de façon à pouvoir être entraîné par le moteur d'avance (22) associé par l'intermédiaire d'un réducteur de vitesse (27, 28, 29).

4. Machine-outil suivant la revendication 1, caractérisée par des organes de support (60) mobiles, qui sont associés à une ou plusieurs tiges filetées (30, 30') et qui sont agencés de façon à pouvoir être déployés automatiquement, hors de la zone de déplacement du dispositif d'avance (20, 20') associé, en fonction de la position de déplacement de ce dispositif.

5. Machine-outil suivant la revendication 1, caractérisée en ce que le support (40) comprend un profilé creux comportant une fente longitudinale (41), la tige filetée d'avance (30') et le dispositif d'avance (20') associé étant disposés à l'intérieur de ce profilé creux.

6. Machine-outil suivant la revendication 5, caractérisée en ce que le chariot (45) portant l'ensemble d'usinage (50) est relié au dispositif d'avance en traversant la fente longitudinale (41), est disposé en forme de caisson autour du profilé creux du support (40) et est guidé au moyen de rails de guidage (18') fixés extérieurement sur ce support (40).

7. Machine-outil suivant la revendication 1, caractérisée en ce qu'à chacune de ses extrémités, le support (40) comporte un bras (42) qui s'étend transversalement vers le cadre de base (10) et qui est solidaire de l'un des dispositifs d'avance (20) et d'au moins une unité de guidage (19), les unités de guidage (19) étant guidées chacune sur des rails de guidage (18) qui sont fixés sur lesdits côtés de cadre (12).

8. Machine-outil suivant la revendication 1, caractérisée en ce qu'une ou plusieurs broches d'outil (53) de l'ensemble d'usinage (50) sont réglables en position suivant la direction de l'axe d'outil (52).

9. Machine-outil suivant la revendication 1, caractérisée en ce que le support (40) est disposé suivant une direction verticale et est guidé sur les deux côtés (12) les plus longs du cadre qui s'étendent horizontalement.

10. Machine-outil suivant la revendication 1, caractérisée en ce que la grille de support est formée de barres de support (14) parallèles entre elles et réunissant les deux côtés (12) les plus longs du cadre.

11. Machine-outil suivant la revendication 1, caractérisée en ce que, comme moyens de fixation de pièce, il est prévu plusieurs ventouses (16) disposées d'une manière réglable sur la grille de support (14) et exerçant leur action sur les pièces sur la face arrière de ces dernières.
